Europäisches Patentamt

European Patent Office

Office européen des brevets

(19)

(11) Publication number:  **0 169 040**
A2

# (12) EUROPEAN PATENT APPLICATION

(21) Application number: 85305021.9

(51) Int. Cl.⁴: **B 60 H 1/00**

(22) Date of filing: 15.07.85

---

(30) Priority: 20.07.84  GB 8418637

(43) Date of publication of application: 22.01.86
Bulletin 86/4

(84) Designated Contracting States: DE FR GB IT SE

(71) Applicant: **Case Poclain Corporation Limited, Meltham Mills, Meltham, GB-Huddersfield, W. Yorkshire HD7 3 AR (GB)**

(72) Inventor: **Booth, Rodney, 46 Mill Moor Road Meltham, Huddersfield West Yorkshire (GB)**

(74) Representative: **Norcliffe, Kenneth Adrian, Patents & Trade Marks Department Case Tractors formerly David Brown Tractors Limited, Meltham Huddersfield, HD7 3AR West Yorkshire (GB)**

---

(54) An air conditioning system for an enclosed compartment of a vehicle.

(57)    An air conditioning system for the cab (10) of a tractor or a truck comprises one blower (13) mounted downsteam of a filter (12) in an intake duct (11) disposed in the cab roof for pressurising the cab (10) with dust-free ambient air through selectively-closeable and variably-directable outlets (15) in a plenum chamber (14); and another blower (21) mounted upstream of a radiator (22) and an evaporator (23) which are alternatively-operable in a housing (20) disposed in the lower part of the cab (10) for recirculating the air within the cab (10) through selectively-closeable outlets (26, 28, 30) in the housing (20) some (30) of which are variably-directable, and through a permanently open windscreen demister outlet (32) in the housing (20).

An Air Conditioning System for an Enclosed Compartment of a Vehicle

This invention relates to an air conditioning system for an enclosed compartment of a vehicle, and particularly but not exclusively for a cab of a tractor or a truck.

Such systems have often comprised a single blower for simply recirculating the air within the compartment through conditioning means, or a single blower for simply feeding ambient air into the compartment through conditioning means, which arrangements have lacked adequate control of air freshness and temperature respectively. Some such systems, including at least one with two blowers, have been disposed wholly or partly in the upper part of the compartment and have embodied long, cumbersome and expensive runs of pipework for circulating heating and/or cooling fluids to and from conditioning means in said upper part.

The object of the present invention is to avoid the above-mentioned disadvantages.

According to the invention, an air conditioning system for an enclosed compartment of a vehicle comprising conditioning means and two blowers is characterised in that one blower is mounted in an intake duct disposed in the upper part of the compartment, and is arranged to pressurise the compartment with ambient air; and the other blower is mounted in series with the conditioning means in a housing disposed in the lower part of the compartment, and is arranged to recirculate the air within the compartment.

A preferred embodiment of the invention will now be described, by way of example only, with reference to the accompanying diagrammatic drawing which is a sectional side elevation of an air conditioning system installed in a tractor cab.

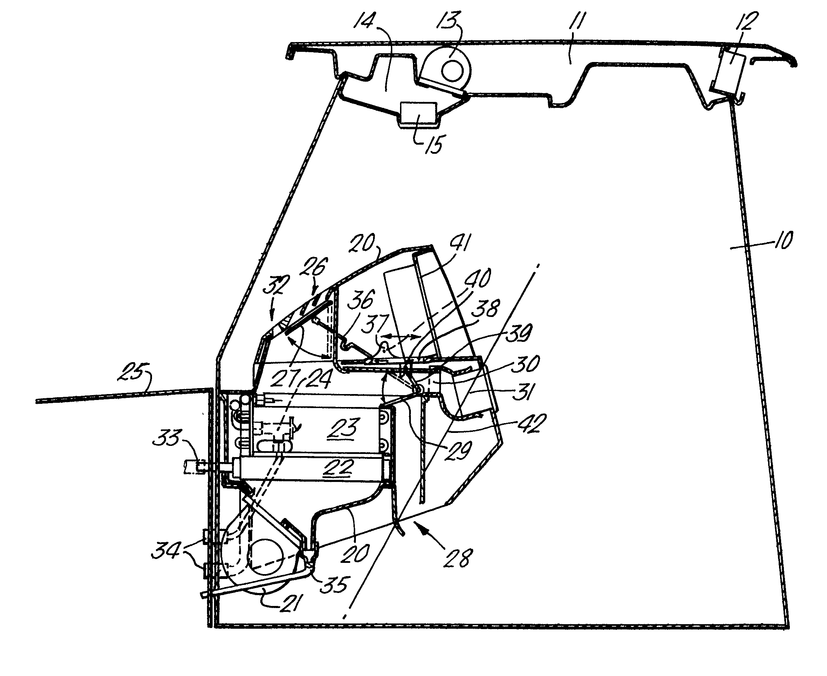

Referring now to the drawing, a tractor cab 10 provided with openable windows (not shown) has an air conditioning system which includes an intake duct 11 disposed in the cab roof and containing a filter 12 in series with one blower 13 comprising an electric motor (not shown) which may be of multi-speed type interposed between and driving two axial-inlet radial-flow fans (not shown) for pressurising the cab 10 with dust-free ambient air when the windows are closed. The blower 13 delivers air into a plenum chamber 14 having two laterally-spaced outlets 15 which are individually closeable and variably directable in known manner. The air conditioning system also includes a housing 20 disposed in the lower part of the cab 10 at the front thereof and containing conditioning means in series with another blower 21 comprising an electric motor (not shown) of multi-speed type interposed between and driving two axial-inlet radial-flow fans (not shown) for recirculating the air within the cab 10. The conditioning means comprise a heater consisting of a radiator 22 through which the cooling water of the tractor engine can be caused to pass, and a thermostatically-controlled cooler consisting of an evaporator 23 through which freon in a known closed-circuit refrigeration system can be caused to pass. An expansion valve 24 is disposed in the inlet of the evaporator 23 but the other components of the refrigeration system, comprising a compressor, a condenser and a drier none of which is shown, are disposed outside the cab 10 under the tractor's bonnet 25. On the downstream side of the conditioning means, the housing 20 is provided near its top with an upwardly-directed laterally-elongated louvred outlet 26 closeable by a hinged flap 27 and at its rear near its bottom with a downwardly-directed laterally-elongated outlet 28 also closeable by a hinged flap 29. The flap 27 is operable by a rod 36 connected to a first controller 37 slideable by the tractor driver in a first slot 38 in the housing 20, and the flap 29 is operable by a rod 39 connected to a second controller 40 slideable by the tractor driver in a second slot (not shown) adjacent and parallel to the first slot 38. At the respective sides of the housing 20 there are provided two subsidiary outlet ducts 30 which are so disposed, in relation to the flap 29 for closing the downwardly-directed outlet 28, that they are open when the outlet 28 is closed and closed by said flap when the outlet 28 is open. Each of the subsidiary outlet ducts 30 has a rear-facing outlet 31 which is individually closeable and variably directable in known manner. At the front of the housing 20 near its top there is provided a laterally-elongated windscreen demister outlet 32 which is permanently open. It will be appreciated that no pipework (but merely electric wiring not shown) is required to run to the upper part of the cab 10, and that all of the necessary water pipes 33 and refrigerant pipes 34 (together with further electric wiring not shown) run to the housing 20 which is conveniently disposed in the lower part of the cab 10 at the front thereof. The housing 20 is

- 4 -

provided with a drain 35 leading outside the cab 10, to prevent any accumulation of moisture within the housing 20. The housing 20 carries an instrument panel 41, and a steering column of which only the centre-line 42 is shown passes through a tunnel (not shown) in the housing 20.

In operation, the two electric motors of the respective blowers 13 and 21, the radiator 22, the evaporator 23 and the two flaps 27 and 29 can all be controlled independently of one another, so that a wide variety of operating modes is available, the chosen speed of the blower 21 affecting the rate of air flow through the housing 20 so as to vary the amount of heating or cooling. A typical mode, which requires the cab windows to be closed, is as follows:- If clean fresh air is required without conditioning, the blower 13 is switched on and the blower 21 is switched off. If cooling of the ambient air is required, both of the blowers 13 and 21 are switched on, the evaporator 23 is made operative and the radiator 22 inoperative, the flap 27 associated with the upwardly-directed outlet 26 is opened and the flap 29 associated with the downwardly-directed outlet 28 is closed. Cooled air is thus caused to flow from the upwardly-directed outlet 26 into the upper part of the cab 10 from where it sinks to the lower part for recirculation through the evaporator 23 by the blower 21. If additional cooling is needed, the blower 13 is switched off so that no fresh air enters the cab 10 and the same body of air contained therein is continuously recirculated through the evaporator 23 by the blower 21. If a further cooling effect is desired while the

0169040

- 5 -

blower 21 is switched on, whether the blower 13 is switched on or off, one or both of the subsidiary outlets 31 is or are opened and can be selectively directed on to the face or body of the tractor driver. If on the other hand heating of the ambient air is required, both of the blowers 13 and 21 are switched on, the radiator 22 is made operative and the evaporator 23 inoperative, the flap 29 associated with the downwardly-directed outlet 28 is opened and the flap 27 associated with the upwardly-directed outlet 26 is closed. Heated air is thus caused to flow from the downwardly-directed outlet 28 into the lower part of the cab 10 from where it rises to the upper part before returning to the lower part for recirculation through the radiator 22 by the blower 21. If desired, fresh air can be selectively directed on to the face of the driver from one or both of the outlets 15 of the blower 13 while heated air is supplied to his feet and the rest of the cab 10. If additional heating is needed, the blower 13 is switched off so that no fresh air enters the cab 10 and the same body of air contained therein is continuously recirculated through the radiator 22 by the blower 21. It is not, however, recommended to leave the blower 13 switched off with the cab windows closed for more than a short time, particularly if heated air is being recirculated, as stale warm air may make the driver drowsy. Air flows from the windscreen demister outlet 32 whenever the blower 21 is switched on, said air being heated when the radiator 22 is made operative and cooled when the evaporator 23 is made operative.

- 6 -

Claims:

1. An air conditioning system for an enclosed compartment of a vehicle comprising conditioning means and two blowers, characterised in that one blower is mounted in an intake duct disposed in the upper part of the compartment, and is arranged to pressurise the compartment with ambient air; and the other blower is mounted in series with the conditioning means in a housing disposed in the lower part of the compartment, and is arranged to recirculate the air within the compartment.

2. An air conditioning system according to claim 1, further characterised in that the conditioning means comprise a heater and a cooler which are alternatively-operable.

3. An air conditioning system according to either of the preceding claims, further characterised in that the housing has an upwardly-directed closeable outlet and a downwardly-directed closeable outlet.

4. An air conditioning system according to claim 3, further characterised in that each of the outlets is closeable by a flap connected to a manually moveable controller.

5. An air conditioning system according to claim 3 or claim 4, further characterised in that the housing has at least one subsidiary outlet arranged to receive air when the downwardly-directed outlet is closed.

0169040

- 7 -

6. An air conditioning system according to claim 5, further characterised in that the or each subsidiary outlet is closeable and variably directable.

7. An air conditioning system according to any one of the preceding claims, further characterised in that the housing has a permanently open windscreen demister outlet.

8. An air conditioning system according to any one of the preceeding claims, further characterised in that said one blower is mounted in series with a filter in the intake duct.